# FASCICULE DE BREVET EUROPEEN

(11) **EP 1 424 654 B1**
(45) Date de publication et mention de la délivrance du brevet: **22.02.2006**
(21) Numéro de dépôt: 03104177.5
(22) Date de dépôt: 13.11.2003
(51) Int. Cl.: G06T 15/10, F41G 7/34, G01C 21/00

(54) **Procédé de synthèse d'une image d'intervisibilité tridimensionnelle**
Verfahren zur Synthese eines dreidimensionalen Sichtbarkeitsbildes
Method for synthesising a three-dimensional intervisibility image

(30) Priorité: 22.11.2002 FR 0214682
(43) Date de publication de la demande: 02.06.2004
(73) Titulaire: Thales, 92200 Neuilly Sur Seine (FR)
(72) Inventeur: Servantie, Xavier, 94117 Arcueil (FR)
(74) Mandataire: Esselin, Sophie

(56) Documents cités:
- US-A- 5 526 260
- US-A1- 2002 080 138

## Description

Le domaine de l'invention est celui des procédés de synthèse d'une image cartographique constituée de pixels et représentant la répartition, sur un terrain survolé par un aéronef, des zones d'intervisibilité.

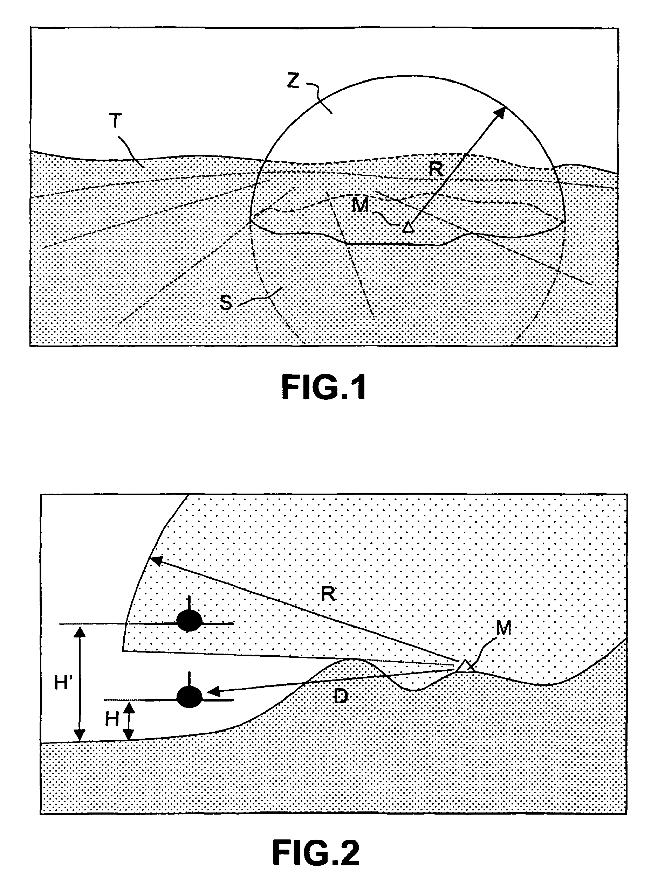

On entend par zone d'intervisibilité Z la zone de portée couverte par une menace potentielle connue. Si la menace M a un rayon de portée R, celle-ci est une portion de sphère S limitée dans sa partie inférieure par le relief du terrain T dans lequel se trouve la menace, comme il est indiqué sur la figure 1. La figure 2 montre, qu'en fonction des accidents de terrain, il existe des zones qui, bien que se situant à une distance D inférieure au rayon de portée R, ne se trouvent pas dans la zone d'intervisibilité de la menace M. Par conséquent, un aéronef sera ou ne sera pas dans la zone d'intervisibilité d'une menace, non seulement en fonction de sa position géographique mais également en fonction de son altitude. Par exemple, sur la figure 2, l'aéronef A se trouve en dehors de la zone d'intervisibilité à l'altitude H et se trouve dans la zone d'intervisibilité à l'altitude H'.

Compte-tenu de l'importance de cette information pour la sécurité d'un aéronef, la représentation des informations d'intervisibilité sur les écrans de visualisation de la planche de bord dudit aéronef doit être la plus claire et la plus ergonomique possible. La représentation des zones d'intervisibilité par des procédés de synthèse d'images cartographiques est donc un problème important et délicat.

Historiquement, les premières représentations des zones d'intervisibilité ont été réalisées par la technique dite de « lancer de rayons ». Le brevet américain US 5086396 est représentatif de cette technique. Des rayons sont lancés à partir de la position de la menace considérée jusqu'à, soit un obstacle limitant la portée effective de la menace, soit la limite de la portée théorique en cas d'absence d'obstacle. Le résultat est visible sur la figure 6 dudit brevet américain. La zone d'intervisibilité correspond à la zone couverte par les rayons. La portée théorique de la menace est indiquée par une ligne généralement circulaire 23A. Dans une option préférentielle, au niveau de la revendication 7, ledit brevet américain propose d'affecter une couleur différente à chaque famille de rayons représentant un type de menace différente, afin sans doute de permettre au pilote de distinguer entre les différents types de menace. Ce grillage de rayons lancés à partir de la menace est surajouté à la coloration de la carte affichée. Cet art antérieur présente plusieurs inconvénients. Ainsi, cet art antérieur entraîne la perte de certaines informations, comme l'information d'ombrage représentant le relief du terrain par exemple, dans les parties de la carte recouvertes par des rayons. Pour les parties de la carte qui sont dans les zones d'intervisibilité de plusieurs menaces, éventuellement de type différent, la lecture des informations véhiculées par la carte sous l'entrelacement des rayons devient malaisé voire impossible pour le pilote de l'aéronef. Par ailleurs, la zone de portée n'est indiquée que par sa limite ce qui ne permet pas toujours au pilote de bien la visualiser dans sa totalité.

Le demandeur de la présente demande a proposé des améliorations significatives à la technique du « lancer de rayons » (publié comme WO 03/003312). Ce procédé s'applique tout particulièrement aux représentations cartographiques dites en 2D5. Une représentation cartographique en 2D5 est une représentation cartographique bidimensionnelle classique dans laquelle l'information de relief a été représentée sous forme d'ombrage. Le principe proposé est de diminuer, tout ou partie des inconvénients de l'art antérieur, en utilisant des couleurs unies, couvrant uniformément les différentes parties de la zone d'intervisiblité considérée, par opposition aux couleurs texturées du type grillage de l'art antérieur, recouvrant partiellement la zone considérée, permettant ainsi de ne pas perdre au moins certaines des informations véhiculées par la carte affichée, et notamment l'information d'ombrage représentative du relief du terrain. On associe alors à chaque type de zone une couleur différente. Ainsi, par exemple, une première zone située en dehors de la limite de portée de la menace a une première couleur, une seconde zone située dans la limite de portée de la menace mais en dehors de la zone d'intervisibilité a une seconde couleur, enfin une troisième zone située dans la zone d'intervisibilité a une troisième couleur. L'étendue des zones dépend de l'altitude de l'aéronef. Par exemple, plus l'altitude dudit aéronef est élevée, plus l'étendue de la seconde zone se réduit.

Dans le cas de représentations tridimensionnelles du terrain, il est également possible de représenter la zone d'intervisibilité sous la forme d'une surface sphérique semi-transparente représentant les limites de la zone d'intervisibilité.

Cependant, ces procédés présentent encore certains inconvénients. Par exemple, lorsque l'aéronef se situe dans la seconde zone située dans la limite de portée de la menace mais en dehors de la zone d'intervisibilité, le pilote ne connaît pas clairement la marge d'altitude restant avant que l'aéronef ne pénètre dans la zone d'intervisibilité. De la même façon, il lui est assez difficile de définir la trajectoire à accomplir pour rester constamment à l'abri, en-dehors ou en dessous de la zone d'intervisibilité.

L'objet de l'invention est de pallier ces différents inconvénients et de présenter au pilote les zones d'intervisibilité de façon plus ergonomique, permettant au pilote de savoir de façon sûre, d'une part si l'aéronef se trouve dans une zone d'intervisibilité et d'autre part, lorsque l'aéronef est hors d'une zone d'intervisibilité, de connaître la marge d'altitude restant avant que l'aéronef ne pénètre dans la zone d'intervisibilité. On améliore ainsi sensiblement la sécurité du vol de l'aéronef.

Plus précisément, l'invention a pour objet un procédé de synthèse d'une image pour applications aéronautiques, ladite image comprenant au moins :
- Une représentation cartographique tridimensionnelle d'un terrain survolé par un aéronef, ledit terrain comportant au moins une menace potentielle ;
- Une représentation tridimensionnelle d'une zone d'intervisibilité (Z) définie comme une portion de la sphère de portée de ladite menace ;

caractérisé en ce que la représentation tridimensionnelle de ladite zone d'intervisibilité est réalisée par une nappe surfacique correspondant à la surface inférieure de la zone d'intervisibilité, ladite surface inférieure étant constituée de points appartenant à la zone d'intervisibilité, tels que la distance de chaque point de la dite surface inférieure au point du terrain ayant les mêmes coordonnées géographiques soit la plus faible possible.

Avantageusement, la nappe surfacique apparaît en semi-transparence de telle sorte que les zones du terrain situées sous la nappe restent en partie visibles.

Avantageusement, la nappe surfacique ayant un endroit et un envers, l'endroit ayant une première couleur, l'envers ayant une seconde couleur, la seconde couleur est différente de la première couleur. Il est également possible que l'endroit ou l'envers de la nappe surfacique aient une texture. Cette texture est, par exemple, un quadrillage régulier. Avantageusement, les lignes du quadrillage sont transparentes.

Avantageusement, pour préciser les limites du périmètre de portée, ledit périmètre de portée maximale de la menace est représenté sous la forme de la surface convexe d'une texture verticale à pas constant reposant sur le terrain. Cette texture est, par exemple, une grille verticale fermée reposant sur le terrain.

L'invention sera mieux comprise et d'autres avantages apparaîtront à la lecture de la description qui va suivre donnée à titre non limitatif et grâce aux figures annexées parmi lesquelles :
- La figure 1 représente une vue tridimensionnelle d'un terrain comportant une zone d'intervisibilité générée par une menace.
- La figure 2 représente une vue en coupe dudit terrain au niveau de ladite zone d'intervisibilité.
- La figure 3 représente une vue tridimensionnelle dudit terrain comportant ladite zone d'intervisibilité générée par une menace, ladite zone étant représentée selon l'invention.
- Les figures 4a et 4b représentent une vue tridimensionnelle d'un terrain avec et sans la représentation d'une partie d'une zone d'intervisibilité générée par une menace, ladite zone étant représentée selon un premier mode de représentation selon l'invention.
- Les figures 5, 6 et 7 représentent trois vues tridimensionnelles du terrain de la figure 4b comportant une partie de la zone d'intervisibilité présentée selon un second, un troisième et un quatrième mode de représentation selon l'invention.
- La figure 8 représente une vue tridimensionnelle d'un terrain comportant la représentation d'une partie d'une zone d'intervisibilité générée par une menace ainsi que la représentation du périmètre de portée maximale de ladite menace.

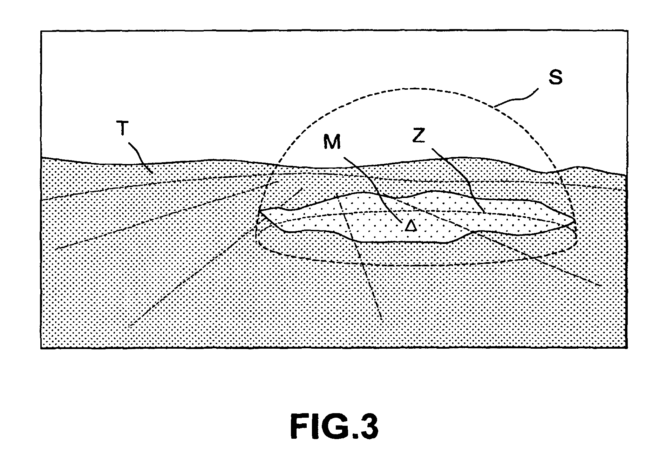

La figure 3 représente une vue générale tridimensionnelle d'un terrain T comportant une menace M. La représentation de la zone d'intervisibilité Z selon l'invention ne comporte plus que la nappe surfacique constituée des points appartenant à la surface inférieure de la zone d'intervisibilité, tels que la distance de chaque point de la nappe surfacique au point du terrain ayant les mêmes coordonnées géographiques soit la plus faible possible. Lorsque l'aéronef se trouve à l'intérieur de la sphère de portée mais dans la zone située entre le terrain et la nappe surfacique, il est à l'abri de la menace. Par conséquent, l'interprétation de la zone d'intervisibilité est considérablement simplifiée. Ou l'aéronef se situe au-dessus de la nappe surfacique, alors ledit aéronef est perçu de la menace et se trouve dans la zone d'intervisibilité. Ou l'aéronef se situe en dessous de la nappe surfacique, alors ledit aéronef n'est pas perçu de la menace et se trouve hors de la zone d'intervisibilité. On fournit ainsi au pilote un critère très simple de sécurité.

En outre, cette simplification présente un intérêt technique majeur. Il suffit, en effet, de générer une seule surface alors que dans un grand nombre de représentations des zones d'intervisibilité, il est nécessaire de générer soit plusieurs surfaces tridimensionnelles soit un volume complet. On économise ainsi en temps de calcul. Ce point est important dans la mesure où, bien entendu, les images doivent être générées en temps réel à une cadence correspondant aux standards vidéo, soit de l'ordre de 25 images par seconde.

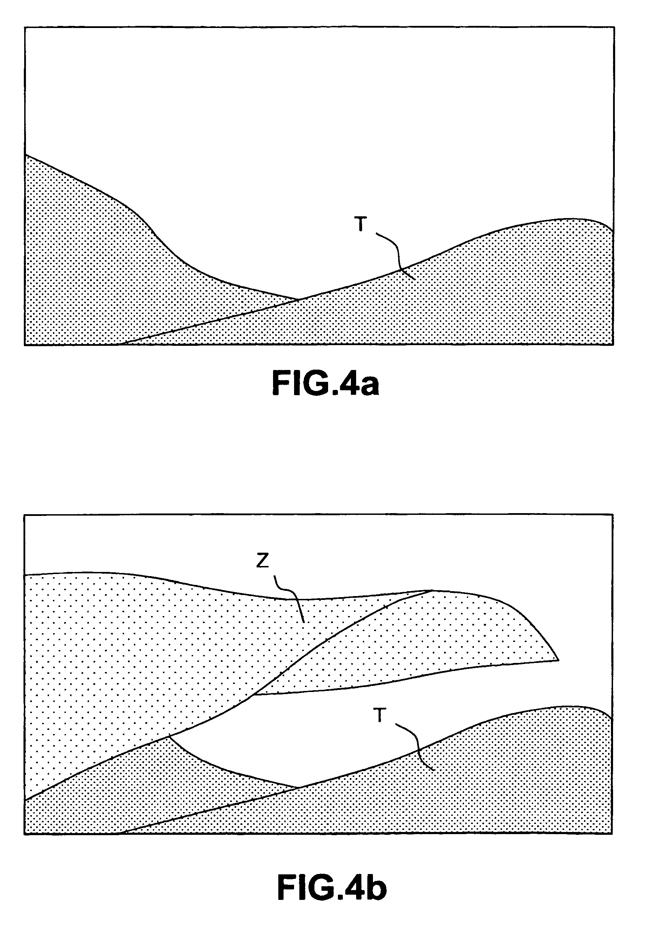

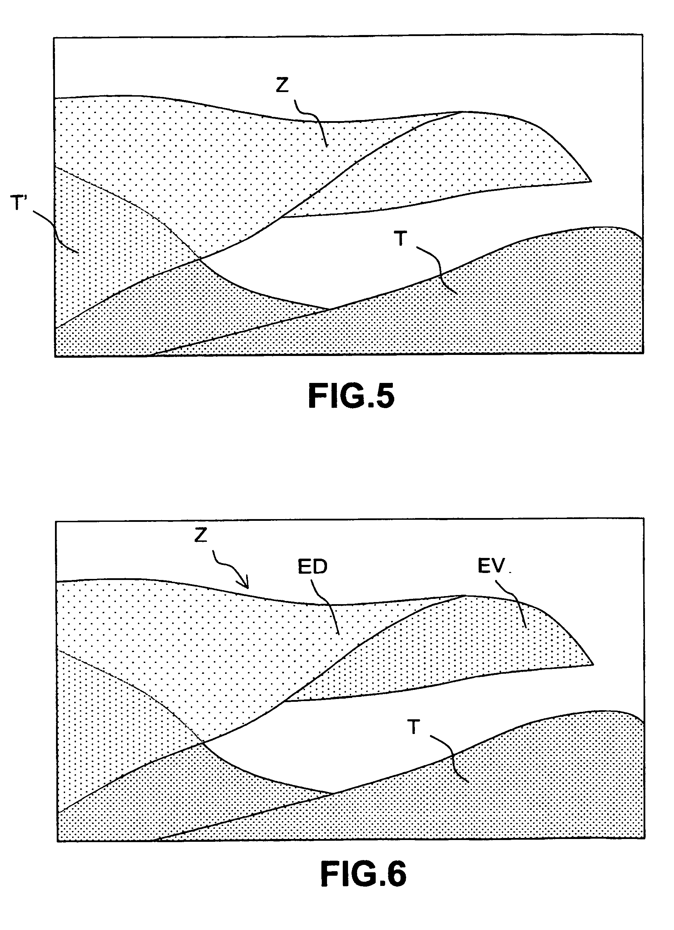

Les figures 4a et 4b représentent une vue tridimensionnelle d'un terrain T avec et sans la représentation d'une partie d'une zone d'intervisibilité Z générée par une menace non représentée sur ces figures, ladite zone étant représentée par une couleur uniforme selon un premier mode de présentation. Comme on peut le voir sur la figure 4b, l'interprétation de la zone d'intervisibilité Z peut être ambiguë. Des modes de présentation complémentaires représentées sur les figures 5, 6 et 7 permettent d'affiner la présentation et la perception de la zone d'intervisibilité.

Deux points sont essentiels pour la lisibilité de la zone d'intervisibilité :
- Perception du relief de la nappe surfacique.
- Perception de la situation de l'aéronef par rapport à cette nappe.

En figure 5, un second mode de représentation de la zone d'intervisibilité est figuré. La nappe surfacique est représentée en semi-transparent de façon que le relief du terrain T' situé sous la nappe surfacique Z puisse apparaître. On facilite ainsi la sensation de position de la nappe par rapport au relief.

En figure 6, un troisième mode de représentation de la zone d'intervisibilité est figuré. La nappe surfacique a un endroit et un envers. Pour améliorer la perception de la surface et pour éviter les inversions de représentation, deux couleurs différentes sont employées pour ledit endroit et le dit envers. L'intérêt de différentier ainsi l'endroit et l'envers de la nappe surfacique permet d'améliorer de façon sensible la perception de la nappe. Par exemple, l'endroit tourné vers le ciel est représenté en vert. L'envers, dans ce cas, tourné vers le terrain est représenté, par exemple, en rose. Par conséquent, si le pilote perçoit la nappe surfacique essentiellement de couleur rose, cela signifie qu'il se trouve sous la nappe surfacique et par conséquent sous la zone d'intervisibilité. Réciproquement, si le pilote perçoit la nappe surfacique essentiellement de couleur verte, cela signifie qu'il se trouve au-dessus de la nappe surfacique et par conséquent dans la zone d'intervisibilité.

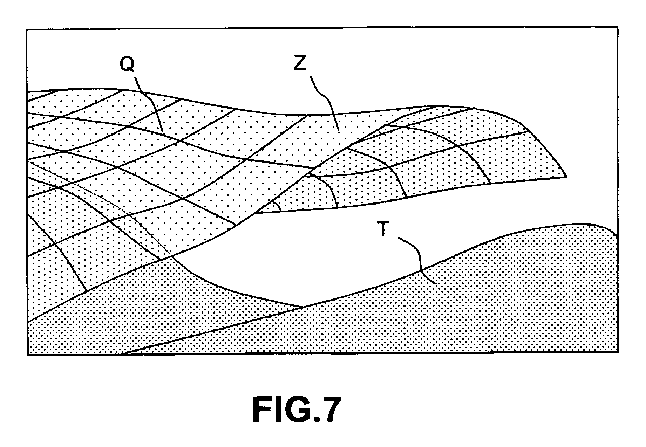

En figure 7, un quatrième mode de représentation de la zone d'intervisibilité est figuré. Une texture Q à pas constant est disposée sur l'endroit et/ou sur l'envers de la nappe surfacique. La texture permet de mettre en évidence le relief de la nappe. Lorsque le motif de la texture apparaît de grande dimension, cela signifie qu'il est proche de l'aéronef, lorsque le motif de la texture apparaît de petite dimension, cela signifie qu'il est plus éloigné de l'aéronef. La plus ou moins grande inclinaison du motif permet également d'améliorer la sensation du relief de la nappe surfacique. La texture la plus simple à mettre en oeuvre et qui « charge » le moins l'image est le quadrillage régulier comme représenté en figure 7. Il est à noter que le « placage » d'une texture n'entraîne pas de calculs spécifiques. En effet, la base du motif est une image stockée dans un format standard et recopiée selon le pas du motif sur toute la surface de l'image.

Il est possible d'améliorer encore le mode de représentation de la figure 7 en représentant les lignes du quadrillage en transparent. On laisse ainsi apparaître le terrain situé sous la zone d'intervisibilité.

Bien entendu, il est possible de générer une image d'intervisibilité mélangeant ces différents modes de représentation.

Lorsque plusieurs menaces sont présentes avec des zones d'intervisibilité en partie communes, il est possible de représenter la zone d'intervisibilité résultante également sous la forme d'une nappe surfacique telle que ladite nappe soit constituée de points appartenant aux surfaces inférieures des zones d'intervisibilité des différentes menaces, tels que la distance de chaque point de la nappe surfacique au point du terrain ayant les mêmes coordonnées géographiques soit la plus faible possible.

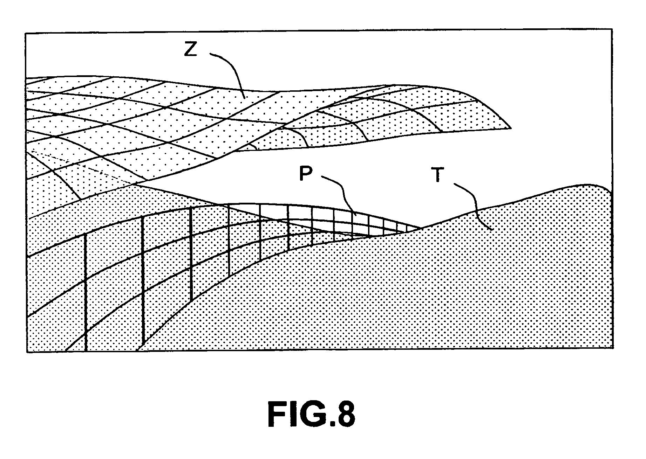

La figure 8 représente une vue tridimensionnelle d'un terrain T comportant la représentation d'une partie d'une zone d'intervisibilité générée par une menace ainsi que la représentation du périmètre P de portée maximale de ladite menace. Le représentation du périmètre P de portée permet de signaler au pilote de l'aéronef qu'il pénètre dans une zone potentiellement couverte par une menace, même s'il se trouve en dehors de la zone d'intervisibilité. Le périmètre est représenté par la surface convexe d'une texture verticale à pas constant, cette texture étant, à titre d'exemple, une grille verticale fermée reposant sur le terrain. La sensation de pénétrer dans une zone dangereuse est ainsi renforcée.

Le procédé de synthèse selon l'invention nécessite des moyens qui sont habituellement disponibles sur les systèmes d'avionique et d'hélivionique des aéronefs modernes.

Le système complet permettant l'affichage de l'image tridimensionnelle selon l'invention comprend :
- Un ou plusieurs interfaces Homme-Machine de type postes de commande permettant au pilote de sélectionner les informations qui lui sont nécessaires. Par exemple, le pilote peut souhaiter une représentation cartographique du terrain et de la zone d'intervisibilité différente de celle liée à la position réelle de l'aéronef.
- Des moyens de localisation géographique de l'aéronef dans l'espace comprenant :
   - Des senseurs (centrale inertielle, système de localisation par satellite de type GPS (Global Positioning system),...) ;
   - Des capteurs (sondes anémo-barométriques, capteurs gyroscopiques, accéléromètres,...)
   - Une unité de navigation assurant le traitement des données issues des chaînes de senseurs et de capteurs et permettant de déterminer la position géographique, l'altitude et l'attitude de l'aéronef.
- Une unité de génération d'une image cartographique de synthèse comportant l'image tridimensionnelle du terrain et, au moins, l'image de la zone d'intervisibilité selon l'un des modes de présentation selon l'invention. Ladite unité comprend :
   - Une base de données cartographiques comprenant au moins les informations de relief du terrain ainsi que la nature et le positionnement des différentes menaces potentielles.
   - Une unité de traitement permettant, en fonction des données issues de l'unité de traitement ainsi que des informations fournies par le pilote de générer l'image tridimensionnelle du terrain et de la zone d'intervisibilité.
- Au moins, un dispositif de visualisation disposé sur la planche de bord de type MFD (Multi Function Display) permettant la représentation en temps réel de l'image tridimensionnelle du terrain et de la zone d'intervisibilité.
- Des liaisons électroniques relient les différentes unités du système complet. La transmission des différentes informations se fait par bus de données selon des standards propres à l'aéronautique.

## Revendications

1. Procédé de synthèse d'une image pour applications aéronautiques, ladite image comprenant au moins :
• Une représentation cartographique tridimensionnelle d'un terrain (T) survolé par un aéronef, ledit terrain comportant au moins une menace potentielle (M) ;
• Une représentation tridimensionnelle d'une zone d'intervisibilité (Z) définie comme une portion de la sphère de portée de ladite menace ;
**caractérisé en ce que** la représentation tridimensionnelle de ladite zone d'intervisibilité est réalisée par une nappe surfacique correspondant à la surface inférieure de la zone d'intervisibilité, ladite surface inférieure étant constituée de points appartenant à la zone d'intervisibilité, tels que la distance de chaque point de la dite surface inférieure au point du terrain ayant les mêmes coordonnées géographiques soit la plus faible possible.

2. Procédé de synthèse d'une image selon la revendication 1, **caractérisé en ce que** ledit procédé comprend des moyens pour faire apparaître la nappe surfacique en semi-transparence de telle sorte que les zones du terrain (T') situées sous la nappe surfacique restent en partie visibles.

3. Procédé de synthèse d'une image selon les revendications 1 ou 2, **caractérisé en ce que** la nappe ayant un endroit (ED) et un envers (EV), ledit procédé comprend des moyens pour faire apparaître l'endroit d'une première couleur et l'envers d'une seconde couleur, la seconde couleur étant différente de la première couleur.

4. Procédé de synthèse d'une image selon l'une des revendications 1 à 3, **caractérisé en ce que** ledit procédé comprend des moyens pour faire apparaître une texture (Q) sur l'endroit ou l'envers de la nappe surfacique.

5. Procédé de synthèse d'une image selon la revendication 4, **caractérisé en ce que** la texture est un quadrillage régulier (Q).

6. Procédé de synthèse d'une image selon l'une des revendications 4 ou 5, **caractérisé en ce que** les lignes du quadrillage sont transparentes.

7. Procédé de synthèse d'une image selon l'une des revendications précédentes, **caractérisé en ce que** ledit procédé comprend des moyens pour faire apparaître le périmètre (P) de portée maximale de la menace sous la forme de la surface convexe d'une texture verticale à pas constant reposant sur le terrain.

8. Procédé de synthèse d'une image selon la revendication 7, **caractérisé en ce que** ladite texture est une grille verticale fermée reposant sur le terrain.

9. Unité de génération d'une image cartographique de synthèse comportant une représentation de l'image tridimensionnelle d'un terrain (T) survolé par un aéronef, ledit terrain (T) comportant au moins une menace (M), ladite image cartographique comportant également une représentation de l'image de la zone d'intervisibilité (Z) de ladite menace (M), **caractérisée en ce que** le procédé de synthèse de l'image cartographique est réalisé selon l'une des revendications précédentes.

10. Système d'avionique monté sur aéronef comportant au moins un ou plusieurs interfaces Homme-Machine de type postes de commande, des moyens de localisation géographique de l'aéronef dans l'espace comprenant des senseurs et des capteurs, une unité de navigation assurant le traitement des données issues des chaînes de senseurs et de capteurs, une base de données cartographiques comprenant au moins les informations de relief du terrain ainsi que la nature et le positionnement des différentes menaces potentielles (M), une unité de génération d'images cartographiques permettant, en fonction des données issues de l'unité de navigation ainsi que des informations fournies par le pilote de générer l'image tridimensionnelle du terrain (T) et de la zone d'intervisibilité (Z), un dispositif de visualisation disposé sur la planche de bord de type MFD (Multi Function Display) permettant la représentation en temps réel de l'image tridimensionnelle du terrain (T) et de la zone d'intervisibilité (Z) et des liaisons électroniques reliant les différentes unités du système, **caractérisé en ce que** l'unité de génération d'images cartographiques est selon la revendication 9.

## Patentansprüche

1. Verfahren zur Synthese eines Bilds für flugtechnische Anwendungen, wobei das Bild mindestens aufweist:
• eine dreidimensionale kartographische Darstellung eines Geländes (T), das von einem Luftfahrzeug überflogen wird, wobei das Gelände mindestens eine potentielle Bedrohung (M) aufweist;
• eine dreidimensionale Darstellung einer Sichtkontaktzone (Z), die als ein Abschnitt der Reichweitensphäre der Bedrohung definiert ist;
**dadurch gekennzeichnet, dass** die dreidimensionale Darstellung der Sichtkontaktzone durch eine Grundfläche entsprechend der unteren Fläche der Sichtkontaktzone hergestellt wird, wobei die untere Fläche aus solchen zur Sichtkontaktzone gehörenden Punkten besteht, dass die Entfernung jedes Punkts der unteren Fläche zu dem Punkt des Geländes, der die gleichen geographischen Koordinaten hat, so gering wie möglich ist.

2. Verfahren zur Synthese eines Bilds nach Anspruch 1, **dadurch gekennzeichnet, dass** das Verfahren Mittel aufweist, um die Grundfläche halbtransparent erscheinen zu lassen, so dass die unter der Grundfläche befindlichen Zonen des Geländes (T') zum Teil sichtbar bleiben.

3. Verfahren zur Synthese eines Bilds nach den Ansprüchen 1 oder 2, **dadurch gekennzeichnet, dass** die Grundfläche eine Vorderseite (ED) und eine Rückseite (EV) hat, wobei das Verfahren Mittel aufweist, um die Vorderseite in einer ersten Farbe und die Rückseite in einer zweiten Farbe erscheinen zu lassen, wobei die zweite Farbe sich von der ersten unterscheidet.

4. Verfahren zur Synthese eines Bilds nach einem der Ansprüche 1 bis 3, **dadurch gekennzeichnet, dass** das Verfahren Mittel aufweist, um eine Struktur (Q) auf der Vorder- oder der Rückseite der Grundfläche erscheinen zu lassen.

5. Verfahren zur Synthese eines Bilds nach Anspruch 4, **dadurch gekennzeichnet, dass** die Struktur ein regelmäßiges Raster (Q) ist.

6. Verfahren zur Synthese eines Bilds nach einem der Ansprüche 4 oder 5, **dadurch gekennzeichnet, dass** die Linien des Rasters durchsichtig sind.

7. Verfahren zur Synthese eines Bilds nach einem der vorhergehenden Ansprüche, **dadurch gekennzeichnet, dass** das Verfahren Mittel aufweist, um den Umfang (P) maximaler Reichweite der Bedrohung in Form der konvexen Fläche einer senkrechten Struktur mit konstantem Abstand erscheinen zu lassen, die auf dem Gelände aufliegt.

8. Verfahren zur Synthese eines Bilds nach Anspruch 7, **dadurch gekennzeichnet, dass** die Struktur ein senkrechtes geschlossenes Gitter ist, das auf dem Gelände aufliegt.

9. Einheit zur Erzeugung eines kartographischen Synthesebilds, das eine Darstellung des dreidimensionalen Bilds eines Geländes (T) enthält, das von einem Luftfahrzeug überflogen wird, wobei das Gelände (T) mindestens eine Bedrohung (M) aufweist, wobei das kartographische Bild ebenfalls eine Darstellung des Bilds der Sichtkontaktzone (Z) der Bedrohung (M) aufweist, **dadurch gekennzeichnet, dass** das Verfahren zur Synthese des kartographischen Bilds nach einem der vorhergehenden Ansprüche durchgeführt wird.

10. In ein Luftfahrzeug eingebautes Luftfahrt-Elektroniksystem, das mindestens eine oder mehrere Mensch-Maschine-Schnittstellen von der Art Bedienungspult, Mittel zur geographischen Lokalisierung des Luftfahrzeugs im Raum, die Sensoren und Sonden aufweisen, eine Navigationseinheit, die die Verarbeitung der von den Ketten von Sensoren und Sonden kommenden Daten gewährleistet, eine Bank von kartographischen Daten, die mindestens die Information über die Geländeform sowie über die Beschaffenheit und die Positionierung der verschiedenen potentiellen Bedrohungen (M) enthält, eine Einheit zur Erzeugung von kartographischen Bildern, die es in Abhängigkeit von den von der Navigationseinheit kommenden Daten sowie von vom Piloten gelieferten Informationen ermöglicht, das dreidimensionale Bild des Geländes (T) und der Sichtkontaktzone (Z) zu erzeugen, eine auf dem Armaturenbrett angeordnete Anzeigevorrichtung von der Art MFD (Multi Function Display), die die Echtzeit-Darstellung des dreidimensionalen Bilds des Geländes (T) und der Sichtkontaktzone (Z) erlaubt, und elektronische Verbindungen aufweist, die die verschiedenen Einheiten des Systems verbinden, **dadurch gekennzeichnet, dass** die Einheit zur Erzeugung von kartographischen Bildern dem Anspruch 9 entspricht.

## Claims

1. Method of synthesizing an image for aeronautical applications, the said image comprising at least:
• a three-dimensional cartographic representation of a terrain (T) overflown by an aircraft, the said terrain comprising at least one potential threat (M);
• a three-dimensional representation of an intervisibility zone (Z) defined as a portion of the sphere of range of the said threat;
**characterized in that** the three-dimensional representation of the said zone of intervisibility is effected by a surface sheet corresponding to the lower surface of the intervisibility zone, the said lower surface consisting of points belonging to the intervisibility zone, such that the distance from each point of the said lower surface to the point of the terrain having the same geographical coordinates is as small as possible.

2. Method of synthesizing an image according to Claim 1, **characterized in that** the said method comprises means for depicting the surface sheet in semi-transparency so that the zones of the terrain (T') that are situated under the surface sheet remain partly visible.

3. Method of synthesizing an image according to Claims 1 or 2, **characterized in that**, the sheet having a front (ED) and a back (EV), the said method comprises means for depicting the front with a first colour and the back with a second colour, the second colour being different from the first colour.

4. Method of synthesizing an image according to one of Claims 1 to 3, **characterized in that** said method comprises means for depicting a texture (Q) on the front or the back of the surface sheet.

5. Method of synthesizing an image according to Claim 4, **characterized in that** the texture is a regular gridwork (Q).

6. Method of synthesizing an image according to one of Claims 4 or 5, **characterized in that** the lines of the gridwork are transparent.

7. Method of synthesizing an image according to one of the preceding claims, **characterized in that** the said method comprises means for depicting the perimeter (P) of maximum range of the threat in the form of the convex surface of a vertical texture with constant pitch resting on the terrain.

8. Method of synthesizing an image according to Claim 7, **characterized in that** the said texture is a closed vertical mesh resting on the terrain.

9. Unit for generating a synthesizing cartographic image comprising a representation of the three-dimensional image of a terrain (T) overflown by an aircraft, the said terrain (T) comprising at least one threat (M), the said cartographic image also comprising a representation of the image of the zone of intervisibility (Z) of the said threat (M), **characterized in that** the method of synthesizing the cartographic image is effected according to one of the preceding claims.

10. Avionic system mounted on aircraft comprising at least one or more man/machine interfaces of control stations type, means of geographical locating of the aircraft in space comprising pick-ups and sensors, a navigation unit ensuring the processing of the data emanating from the chains of pick-up and sensors, a cartographic database comprising at least the terrain relief information as well as the nature and the positioning of the various potential threats (M), a unit for generating cartographic images making it possible, as a function of the data emanating from the navigation unit and the information provided by the pilot, to generate the three-dimensional image of the terrain (T) and of the intervisibility zone (Z), a display device disposed on the instrument panel of MFD (Multi Function Display) type allowing the real-time representation of the three-dimensional image of the terrain (T) and of the intervisibility zone (Z) and of the electronic links connecting the various units of the system, **characterized in that** the unit for generating cartographic images is according to Claim 9.
